# DEMANDE DE BREVET EUROPEEN

(11) **EP 3 666 606 A1**
(43) Date de publication de la demande: **17.06.2020**
(21) Numéro de dépôt: 19212973.2
(22) Date de dépôt: 02.12.2019
(51) Int. Cl.: B60R 25/021, E05B 19/00

(54) **VERROU ET CLÉ POUR DISPOSITIF ANTIVOL DE COLONNE DE DIRECTION DE VÉHICULE AUTOMOBILE**

(30) Priorité: 10.12.2018 FR 1872631
(71) Demandeur: U-Shin France, 94000 Créteil (FR)
(72) Inventeur: RENAUD, Jean-Pierre, 94046 CRETEIL Cedex (FR); COUSIN, Arnaud, 94000 CRETEIL (FR)
(74) Mandataire: Chevalier, Renaud Philippe

(57) **Abrégé**

Verrou (1) et clé pour dispositif antivol (2) comportant un pêne et un moyen de maintien (4) du pêne entre des positions de verrouillage et de libération, le verrou comprenant un rotor (5) et une pluralité de paillettes (7) montées à coulissement dans le rotor entre au moins des positions saillante et escamotée, une came de commande (9) destinée à suivre au moins le profil d'un chemin de commande (10,25) prévu sur une tige de clé (8), la came (9) étant apte à se déplacer dans le rotor entre :
une position saillante obtenue lorsque la came de commande (9) suit le profil du chemin de came de commande (10,25) lors de l'introduction de la tige de clé (8), la came de commande (9) étant apte à actionner le moyen de maintien (4) dans le but de maintenir le pêne (3) en position de libération de la colonne de direction, et une position escamotée obtenue lorsque la came de commande (9) suit le profil du chemin de came de commande (10,25) lors du retrait de la tige de clé (8), correspondant à la position de libération du pêne (3) pour bloquer la colonne de direction, Selon l'invention, la came de commande (9) comprend au moins un ergot (11) agencé pour être reçu dans le chemin de came de commande (10,25) de la tige de clé (8) de manière à suivre le profil de la tige de clé (8) dans le rotor (5) de sorte qu'un déplacement axial de la tige de clé (8) entraine un déplacement de la came de commande (9).

## Description

Le domaine technique de l'invention est celui des verrous, en particulier destinés à être montés dans des dispositifs antivol de colonne de direction de véhicule automobile.

Les dispositifs antivol de colonne de direction comprennent un organe de verrouillage ou pêne de verrouillage de la colonne de direction lors du retrait de la clé de contact.

À cet effet, le pêne est monté mobile dans le dispositif antivol entre une position de verrouillage de la colonne et une position de libération de la colonne de direction.

De tels antivols comprennent généralement un verrou avec un stator et un rotor actionné par une clé codée et commandant notamment le mouvement du pêne lors de la rotation de la clé dans le verrou ou retrait de celle-ci du verrou.

Un verrou classique comporte un corps fixe appelé stator, monté solidaire du mécanisme de fermeture et/ou de l'ouvrant, un rotor, de forme générale cylindrique, emboîté dans le corps fixe et présentant un logement pouvant accueillir une clé. Un jeu de paillettes, mobiles radialement, retient ou libère en rotation le rotor par rapport au corps fixe. Les paillettes sont déplacées lorsqu'une clé est introduite dans le logement du rotor, et le rotor n'est libéré en rotation que lorsque la clé est conforme. C'est ensuite la rotation du rotor qui déclenche le déverrouillage du mécanisme de fermeture.

Il est connu de l'art antérieur des clés comprenant au moins un chemin de came comportant une succession de crêtes et de creux pour former un codage.

Le chemin de came est agencé pour recevoir au moins un ergot radial des paillettes du verrou de manière à ce que les ergots suivent la succession de crêtes et de creux lors du déplacement de la tige de clé dans le rotor de sorte qu'un déplacement axial de la clé entraine un déplacement de chacune des paillettes selon leur direction de coulissement jusqu'à la position escamotée permettant le déverrouillage du verrou par une rotation de la clé.

La réglementation exige, lorsque la clé est insérée dans le verrou, que le pêne déverrouille la colonne de direction d'un véhicule avant la mise en route des accessoires de la voiture. Elle exige aussi que le pêne verrouille la colonne de direction du véhicule lors du retrait de la clé de contact après la rotation de la clé pour arrêter le moteur du véhicule.

La commande du pêne peut s'effectuer par un moyen de commande tel une tirette montée en translation ou un levier monté rotatif relié à une came de commande elle-même solidaire du rotor du verrou, la came de commande ayant pour fonction de détecter la présence ou l'absence de la clé pour retenir le pêne associé au moyen de commande.

Le verrou permet donc, via le moyen de commande du pêne et la came de commande, de déverrouiller le pêne de la position où il bloque en rotation la colonne de direction.

En fonctionnement normal, le moyen de commande exerce une force sur la came de commande pour la maintenir en position escamotée permettant ainsi le verrouillage de la colonne de direction. Néanmoins, la présence de frottements voire un arc-boutement de la came de commande peut générer un blocage de la cinématique, empêchant le moyen de commande de libérer le pêne et de verrouiller la colonne de direction.

On connait également le document WO2008/074726 divulguant un verrou pour dispositif antivol de colonne de direction comprenant un levier basculant muni d'un étrier comprenant un orifice laissant passer la clé. Lorsque la clé est introduite dans l'orifice, la tranche supérieure de la clé vient exercer une force sur une surface supérieure de l'étrier pour le mettre en rotation et le basculer dans une position haute.

Le verrou comprend un ressort travaillant en compression de façon à repousser un coulisseau pour bloquer la colonne de direction, lorsque la clé n'est pas introduite.

Par opposition, lorsque la clé est retirée de l'étrier, celui-ci effectue un mouvement de rotation pour retrouver sa position basse et le ressort repousse le coulisseau pour bloquer la colonne de direction.

Cependant dans l'art antérieur, la clé est passive car c'est le ressort du moyen de commande qui est actif et qui joue sur le moyen de commande de manière à déplacer la came de commande en position escamotée pour libérer le pêne.

L'invention vise à résoudre ces inconvénients en proposant un verrou pour dispositif antivol de colonne de direction de véhicule automobile et une clé associée permettant d'éviter le blocage de la came de commande nuisible à la cinématique de déplacement du pêne en position de verrouillage de la colonne de direction.

L'invention concerne un verrou pour dispositif antivol de colonne de direction de véhicule automobile comportant un pêne et un moyen de maintien du pêne en translation entre une position de verrouillage de la colonne de direction et une position de libération de la colonne.

Le verrou comprend un rotor monté en rotation autour d'un axe A dans un stator et une pluralité de paillettes montées à coulissement dans le rotor suivant une direction transversale B entre au moins une position saillante dans laquelle elles immobilisent en rotation le rotor par rapport au stator, et une position escamotée à l'intérieur du rotor après l'introduction dans le rotor d'une tige de clé, permettant le déverrouillage du verrou par une rotation de la clé.
Le verrou selon l'invention comprend une came de commande destinée à suivre au moins le profil d'un chemin de came de commande prévu sur la tige de clé lors du déplacement de ladite clé dans le rotor, la came de commande étant apte à se déplacer dans le rotor entre :
une position saillante obtenue lorsque la came de commande suit le profil du chemin de came de commande lors de l'introduction de la tige de clé, la came de commande étant apte à actionner le moyen de maintien dans le but de maintenir le pêne en position de libération de la colonne de direction, et une position escamotée obtenue lorsque la came de commande suit le profil du chemin de came de commande lors du retrait de la tige de clé, correspondant à la position de libération du pêne pour bloquer la colonne de direction, selon l'invention la came de commande comprend au moins un ergot agencé pour être reçu dans le chemin de came de commande de la tige de clé de manière à suivre le profil de la tige de clé dans le rotor de sorte qu'un déplacement axial de la tige de clé entraine un déplacement de la came de commande.

Selon un autre mode de réalisation, la came de commande est montée en translation dans le rotor permettant le coulissement de la came de commande selon la direction transversale B.

Selon un autre mode de réalisation, la came de commande est solidaire d'un levier du moyen de maintien. La came de commande et le levier sont montés en rotation autour d'un axe de rotation C sur le rotor pour déplacer le pêne entre une position de libération et une position de verrouillage.

La came de commande comprend un orifice central destiné à être traversé par la tige de clé, l'ergot étant positionné à l'intérieur de l'orifice central et plus précisément sur une paroi interne délimitant l'orifice central.

De préférence, la came de commande est positionnée entre les paillettes et une face d'entrée du verrou par laquelle la clé est destinée à être insérée, la came de commande étant positionnée parallèlement aux paillettes.

Selon un mode de réalisation, la came de commande comprend deux ergots positionnés sur la paroi interne de l'orifice central dont un premier ergot destiné à déplacer la came de commande en position saillante lorsque le premier ergot suit le profil du chemin de came de commande de la tige de clé et un deuxième ergot destiné à déplacer la came de commande en position escamotée lorsque le deuxième ergot suit le profil d'un chemin de came de commande d'escamotage de la tige de clé. Les ergots sont opposés et en regard l'un de l'autre pour coopérer avec les chemins de came de commande qui sont opposés et décalés l'un par rapport à l'autre.

Préferentiellement, le moyen de maintien comprend un ressort pour maintenir une première extrémité du levier en appui contre la came de commande et la ramener vers la position escamotée correspondant à la position de libération du pêne (3) pour bloquer la colonne de direction.

L'invention concerne également une clé comprenant une tige de clé agencée pour coopérer avec des paillettes d'un verrou d'un dispositif antivol tel que décrit précédemment.

Selon l'invention, la tige de clé comprend au moins un chemin de came de commande destiné à recevoir un ergot prévu sur une came de commande logée dans le rotor du verrou de sorte à déplacer la came de commande lorsque la tige de clé est déplacée dans le rotor entre :
∘ une position saillante obtenue lorsque la came de commande suit le profil du chemin de came de commande lors de l'introduction de la tige de clé, la came de commande étant apte à actionner le moyen de maintien dans le but de maintenir le pêne en position de libération de la colonne de direction, et
∘ une position escamotée obtenue lorsque la came de commande suit le profil du chemin de came de commande lors du retrait de la tige de clé , correspondant à la position de libération du pêne pour bloquer la colonne de direction.

La tige de clé présente une section quadrilatérale, allongée dans le sens du coulissement des paillettes, et deux faces latérales opposées dont l'une au moins comprend un chemin de came de codage comportant une succession de crêtes et de creux pour former un codage.

Le chemin de came de codage est agencé pour recevoir au moins un ergot des paillettes du verrou de manière à ce que les ergots suivent cette succession de crêtes et de creux lors de l'introduction de la tige de clé dans le rotor de sorte qu'un déplacement axial de la clé entraine un déplacement de chacune des paillettes selon la direction transversale B jusqu'à la position escamotée permettant le déverrouillage du verrou par une rotation de la clé.

Le chemin de came de codage est prolongé par le chemin de came de commande de sorte qu'un ergot prévu sur la came de commande puisse suivre le chemin de came de commande après avoir suivi le chemin de came de codage pour amener la came de commande en position saillante lors de l'introduction de la tige de clé dans le rotor.

Le chemin de came de commande est taillé en creux et décalé par rapport au chemin de came de codage dans le plan des faces latérales et vers le moyen de maintien du pêne.

De préférence, le chemin de came de commande est rectiligne, et est positionné dans une zone aval de la tige de clé par rapport au sens d'introduction de la clé dans le verrou.

Selon un mode de réalisation, la tige de clé comprend un premier rebord latéral formant le chemin de came de commande destiné à guider un premier ergot positionné sur une paroi interne d'un orifice central de la came de commande. Le premier rebord latéral est positionné dans une zone aval de la tige de clé par rapport au sens d'introduction de la clé dans le verrou.

La tige de clé comprend un deuxième rebord latéral opposé au premier rebord latéral et formant un chemin de came de commande d'escamotage de la came de commande destiné à guider un deuxième ergot positionné sur la paroi interne de l'orifice central de la came de commande.

Le deuxième rebord latéral est positionné dans une zone amont de la tige de clé par rapport au sens d'introduction de la clé dans le verrou.

La tige de clé comprend une première gorge de guidage sur une première face latérale positionnée dans la zone amont et qui prolonge le premier rebord latéral de façon décalée dans le plan de la première face latérale.

La tige de clé comprend une deuxième gorge de guidage positionnée sur la première face latérale prolongeant le deuxième rebord latéral de façon décalée dans le plan de la première face latérale.

Les gorges de guidage sont opposées et partiellement décalées l'une par rapport à l'autre suivant la direction de l'axe A.

Lors de l'introduction de la clé dans le verrou, le premier ergot est guidé par la première gorge de guidage puis par le premier rebord latéral. Parallèlement, le deuxième ergot longe le deuxième rebord latéral puis coulisse le long de la deuxième gorge de guidage et vice versa lors du retrait de la clé.

L'invention fournit ainsi un verrou et une clé pour dispositif antivol de colonne de direction de véhicule automobile et une clé associée permettant d'éviter le blocage de la came de commande.

L'invention concerne également un ensemble comprenant un verrou selon l'invention et une clé selon l'invention.

D'autres caractéristiques et avantages de l'invention ressortiront à la lecture de la description qui suit, donnée uniquement à titre d'exemple, en référence aux figures annexées, qui illustrent :
- figure 1, une vue en coupe d'un dispositif antivol de colonne de direction de véhicule automobile selon un mode de réalisation de l'invention ;
- figure 2, un schéma de la tige de clé pendant son insertion dans le verrou lorsque la came de commande est en position escamotée ;
- figure 3, un schéma de la tige de clé pendant son insertion dans le verrou lorsque la came de commande est en position saillante ;
- figures 4 à 7, différentes étapes lors de l'introduction de la clé dans le verrou selon un autre mode de réalisation de l'invention ;
- figures 8 à 10, différentes étapes lors de l'extraction de la clé hors du verrou selon le second mode de réalisation de l'invention ;
- figure 11, un dispositif antivol de colonne de direction de véhicule automobile selon un troisième mode de réalisation de l'invention.

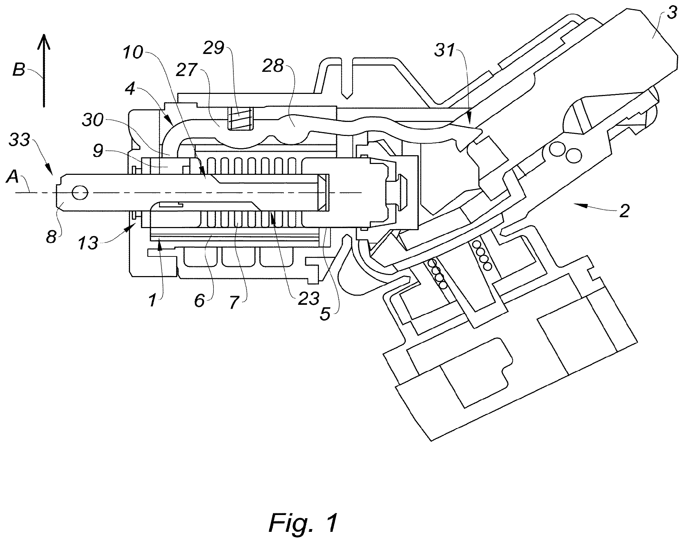

La figure 1 représente une vue en coupe d'un dispositif antivol 2 de colonne de direction de véhicule automobile selon un mode de réalisation de l'invention.

Le dispositif antivol 2 de colonne de direction de véhicule automobile comprend un verrou 1 comportant un pêne 3 et un moyen de maintien 4 du pêne 3 en translation entre une position de verrouillage de la colonne de direction et une position de libération de la colonne.

Le pêne 3 coulisse entre une position saillante dans laquelle il verrouille la colonne de direction et une position escamotée dans laquelle il libère la colonne de direction.

Le verrou 1 comprend un rotor 5 monté en rotation autour d'un axe A dans un stator 6 et une pluralité de paillettes 7 montées à coulissement dans le rotor 5 suivant une direction transversale B entre au moins une position saillante dans laquelle elles immobilisent en rotation le rotor 5 par rapport au stator 6, et une position escamotée à l'intérieur du rotor 5 après l'introduction dans le rotor 5 d'une tige de clé 8, autorisant la rotation du rotor 5.

Selon l'invention, le verrou 1 comprend une came de commande 9 destinée à suivre au moins le profil d'un chemin de came de commande 10 prévu sur la tige de clé 8 lorsqu'elle est se déplace longitudinalement dans le rotor 5.

Dans cet exemple, la came de commande 9 est montée à coulissement dans le rotor 5 suivant la direction transversale B entre:
- une position saillante obtenue lorsque la came de commande 9 suit le profil du chemin de came de commande 10 de la tige de clé 8 et
- une position escamotée obtenue lorsque la came de commande 9 suit le profil du chemin de came de commande 10 de la tige de clé 8 lors du retrait de celle-ci.

Dit autrement, la position saillante est obtenue lorsque la came de commande 9 suit le profil montant du chemin de came de commande 10 de la tige de clé 8, le profil montant du chemin de came de commande de la tige de clé étant défini dans le sens d'introduction de la tige de clé.

Et la position escamotée est obtenue lorsque la came de commande 9 suit le profil descendant du chemin de came de commande 10 de la tige de clé 8, le profil descendant du chemin de came de commande de la tige de clé étant défini dans le sens d'extraction ou retrait de la tige de clé.

La came de commande 9 comprend au moins un ergot 11 agencé pour être reçu dans le chemin de came de commande 10 de la tige de clé 8 de manière à suivre le profil de la tige de clé 8 dans le rotor 5 de sorte qu'un déplacement axial de la tige de clé 8 entraine un déplacement de la came de commande 9 selon la direction transversale B.

L'ergot 11 peut avoir une forme parallélépipédique et s'étendre selon l'axe A.

La came de commande 9 comprend un orifice central 12 destiné à être traversé par la tige de clé 8. L'ergot 11 est positionné à l'intérieur de l'orifice central 12 et plus précisément sur une paroi interne 15 délimitant l'orifice central 12.

La came de commande 9 et l'orifice central 12 présentent une forme générale parallélépipédique. La came de commande 9 présente une section générale quadrilatérale, proche de celle des paillettes 7.

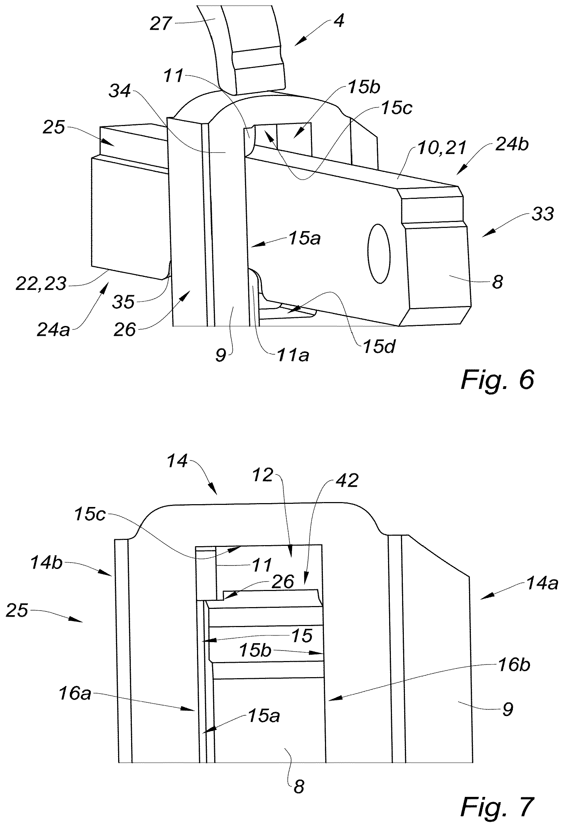

L'orifice central 12 présente une section quadrilatérale. La paroi interne 15 comprend deux parois latérales 15a, 15b opposées de plus grande longueur et deux parois transversales 15c, 15d opposées de plus petite longueur, comme illustré sur les figures 6 et 7.

L'ergot 11 est positionné sur la paroi latérale 15a destinée à être en regards du chemin de came de commande 10 de la tige de clé 8.

La came de commande 9 est logée à l'intérieur du verrou 1 dans le même logement prévu pour les paillettes 7 et paralèlement aux paillettes 7. La came de commande 9 est alignée avec les paillettes 7.

La came de commande 9 comprend une surface de contact 14 sur son côté externe de plus faible dimension qui est destinée à venir en contact avec la première extrémité 30 du levier 27.

De préférence, la surface de contact 14 est courbée.

La came de commande 9 comprend deux surfaces latérales 14a, 14b sur ses côtés externes de plus grande dimension.

De préférence, la came de commande 9 est positionnée en amont des paillettes 7, à proximité d'une face d'entrée 13 du verrou 1. Cette face d'entrée 13 correspond à la face par laquelle est insérée la clé. Les positions amont et aval sont définies par rapport au sens d'insertion de la clé.

La came de commande 9 est positionnée entre la face d'entrée 13 du verrou 1 et les paillettes 7.

En variante, la came de commande 9 peut être positionnée différemment, comme par exemple en aval des paillettes 7.

Le moyen de maintien 4 comprend un levier 27 apte à tourner autour un axe de rotation 28 tout en étant apte à translater selon la direction B sous impulsion du ressort 29. Le moyen de maintien 4 comprend en effet un ressort 29 pour maintenir une première extrémité 30 du levier 27 en appui contre la came de commande 9 et la ramener vers la position escamotée correspondant à la position de verrouillage du pêne 3.

Le ressort 29 est en appui sur un support 32.

Le levier 27 comprend une deuxième extrémité 31 coopérant avec le pêne 3 pour maintenir ce dernier en position de libération de pêne.

La clé destinée à être introduite dans le verrou 1 comprend une tige de clé 8 agencée pour coopérer avec les paillettes 7 du verrou 1 du dispositif antivol 2.

La tige de clé 8 présente une section quadrilatérale, allongée dans le sens du coulissement des paillettes 7, et deux faces latérales 16a, 16b opposées dont l'une au moins comprend un chemin de came de codage 17 comportant une succession de crêtes 18 et de creux 19 pour former un codage.

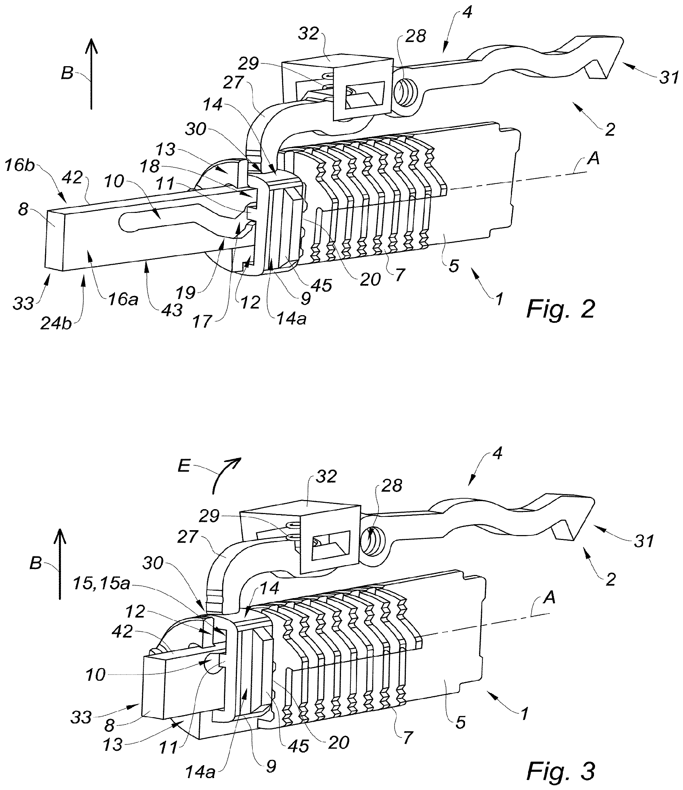

Le chemin de came de codage 17 est agencé pour recevoir au moins un ergot 20 des paillettes 7 du verrou 1 de manière à ce que les ergots 20 suivent cette succession de crêtes 18 et de creux 19 lors de l'introduction de la tige de clé 8 dans le rotor 5 de sorte qu'un déplacement axial de la clé entraine un déplacement de chacune des paillettes 7 selon la direction transversale B jusqu'à la position saillante en l'occurrence affleurante avec le diamètre du rotor (fig. 3) permettant le déverrouillage du verrou 1 par une rotation de la clé. Il est à préciser que c'est la rotation de la clé qui va ramener le pêne 3 hors de sa position de verrouillage, libérant ainsi la colonne de direction.

Comme dit précédemment, la tige de clé 8 comprend au moins un chemin de came de commande 10 destiné à faire coulisser la came de commande 9 logée dans le rotor 5 du verrou 1 lorsque la tige de clé 8 se déplace dans le rotor 5 suivant la direction transversale B entre la position saillante et la position escamotée.

Les figures 2 et 3 illustrent un mode de réalisation dans lequel le chemin de came de codage 17 est prolongé par le chemin de came de commande 10 de sorte que l'ergot 11 prévu sur la came de commande 9 puisse suivre le chemin de came de commande 10 après avoir suivi le chemin de came de codage 17 pour amener la came de commande 9 en position saillante ou escamotée selon le déplacement de la tige de clé 8 dans le rotor 5.

Le chemin de came de commande 10 est décalé par rapport au chemin de came de codage 17 vers le moyen de maintien 4 du pêne 3 et dans le plan d'une première face latérale 16a de la tige de clé 8.

Par rapport au plan de la figure 3, le chemin de came de commande 10 est décalé vers le haut de la figure 3.

Le chemin de came de commande 10 est rectiligne, par exemple.

La came de commande 9 est en position escamotée lorsque la clé n'est pas insérée dans le verrou 1 ou lorsque l'ergot 11 de la came de commande 9 suit le profil du chemin de came de codage 17 de la tige de clé 8 au début de l'insertion de la clé dans le verrou.

La tige de clé 8 comprend une première tranche 42 et une deuxième tranche 43 opposées et parallèles entres elles.

Le chemin de came de commande 10 est positionné le long de la première tranche 42 de la tige de clé 8 au plus près de la première extrémité 30 du levier 27.

Le chemin de came de commande 10 est positionné dans une zone aval 24b de la tige de clé 8 par rapport au sens d'introduction de la clé dans le verrou 1, c'est-à-dire près de l'extrémité arrière 33 de la tige de clé 8 destinée à recevoir un élément de préhension.

Le chemin de came de commande 10 est taillé en creux ou dit autrement, creusé dans la tige de clé 8.

Ainsi, lors de l'introduction de la clé dans le verrou 1, les ergots 20 des paillettes 7 et l'ergot 11 de la came de commande 9 suivent le chemin de came de codage 17 de la tige de clé 8, comme représenté sur la figure 2, jusqu'au moment où l'ergot 11 de la came de commande 9 s'insère dans le chemin de came de commande 10 pour suivre son profil, comme représenté sur la figure 3, provocant le coulissement selon la direction transversale B de la came de commande 9 en position saillante, entraînant et la rotation et translation dans le sens de la compression du ressort 29, du levier 27 du moyen de maintien 4 vers le sens E. Le ressort 29 est alors comprimé et la deuxième extrémité 31 du levier 27 est apte à maintenir le pêne 3 en position de libération de la colonne de direction une fois cette position atteinte suite à une rotation de la clé.

Par opposition, lors de l'extraction de la clé hors du verrou 1, l'ergot 11 de la came de commande 9 suit le profil du chemin de came de commande 10. Lorsqu'il suit celui du chemin de came de codage 17, ceci entraine l'escamotage de la came de commande 9 à l'intérieur du verrou 1. La deuxième extrémité 31 du levier 27 se désengage du pêne 3 pour le libérer et lui permettre de se déployer pour verrouiller la colonne de direction.

En variante, la tige de clé 8 peut comprendre symétriquement deux chemins de came de commande 10 disposés sur chaque face latérale 16a, 16b de la tige de clé 8 et coopérant avec deux ergots 11 positionnés en opposition sur la paroi interne 15 de la came de commande 9.

En variante, le chemin de came de commande 10 taillé en creux peut être positionné dans la zone amont 24a de la tige de clé 8 ou déboucher à l'extérieur par l'une des tranches 42, 43 formant un chemin de came de commande externe.

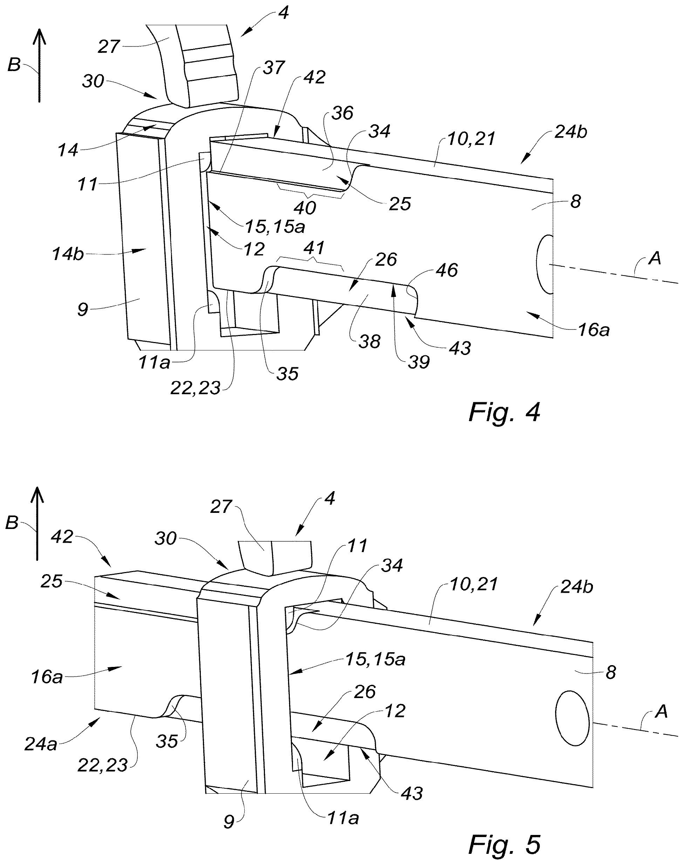

Les figures 4 à 10 représentent un autre mode de réalisation dans lequel la came de commande 9 suit un chemin de came de commande 10 externe.

La came de commande 9 comprend deux ergots 11, 11a positionnés sur une paroi interne 15 de l'orifice central 12 dont un premier ergot 11 destiné à déplacer la came de commande 9 en position saillante lorsque le premier ergot 11 suit le profil du chemin de came de commande 10 de la tige de clé 8 et un deuxième ergot 11a destiné à déplacer la came de commande 9 en position escamotée lorsque le deuxième ergot 11a suit le profil d'un chemin de came de commande d'escamotage 23 prévu sur la tige de clé 8.

Les ergots 11, 11a sont opposés et en regard l'un de l'autre pour coopérer avec les chemins de came de commande 10, 23 qui sont opposés et décalés.

Ils peuvent avoir une forme parallélépipédique et s'étendent selon l'axe A.

Le chemin de came de commande 10 est alors formé par le premier rebord latéral 21 de la tige de clé 8 formé sur la première tranche 42 et est destiné à guider le premier ergot 11 de la came de commande 9.

Le premier rebord latéral 21 est positionné dans la zone aval 24b de la tige de clé 8 par rapport au sens d'introduction de la clé dans le verrou 1.

Le deuxième rebord latéral 22 opposé au premier rebord latéral 21 de la tige de clé 8 et formé sur la deuxième tranche 43, forme un chemin de came de commande d'escamotage 23 de la came de commande 9 destiné à guider le deuxième ergot 11a de la came de commande 9.

Le deuxième rebord latéral 22 est positionné dans une zone amont 24a de la tige de clé 8 par rapport au sens d'introduction de la clé dans le verrou 1.

Le deuxième rebord latéral 22 se prolonge jusqu'à une extrémité avant 44 de la clé.

La tige de clé 8 comprend une première gorge de guidage 25 creusée dans sa première face latérale 16a et positionnée dans la zone amont 24a.

La première gorge de guidage 25 est décalée par rapport au premier rebord latéral 21, vers une direction opposée au moyen de maintien 4 du pêne 3 et dans le plan de la première face latérale 16a.

La première gorge de guidage 25 est creusée le long et dans une portion de la première tranche 42 de la tige de clé 8.

La première gorge de guidage 25 présente une forme allongée, rectiligne, est de section sensiblement quadrilatèrale et se prolonge jusqu'à une extrémité avant 44 de la clé.

Une première marche 34 est formée entre la première gorge de guidage 25 et le premier rebord latéral 21.

La tige de clé 8 comprend une deuxième gorge de guidage 26 creusée dans sa première face latérale 16a, et prolongeant le deuxième rebord latéral 22 de façon décalée.

La deuxième gorge de guidage 26 est creusée le long et dans une portion de la deuxième tranche 43 de la tige de clé 8 opposée à la première tranche 42.

Une deuxième marche 35 est formée entre la deuxième gorge de guidage 26 et le deuxième rebord latéral 22.

La deuxième gorge de guidage 26 présente une forme allongée, rectiligne, et est de section sensiblement quadrilatèrale.

Les gorges de guidage 25, 26 sont opposées et partiellement décalées l'une par rapport à l'autre suivant la direction de l'axe A et dans le plan des faces latérales 16a, 16b.

La première gorge de guidage 25 et la deuxième gorge de guidage 26 sont à l'extérieur de la tige de clé 8.

La première gorge de guidage 25 est délimitée par une première paroi 36 parallèle à la première face latérale 16a de la tige de clé 8 et une deuxième paroi 37, parallèle au premier rebord latéral 21. La première paroi 36 est perpendiculaire à la deuxième paroi 37.

La première marche 34 est formée par une paroi reliant le premier rebord latéral 21 à la deuxième paroi 37. La première marche 34 est de préférence sensiblement inclinée par rapport à la deuxième paroi 37 et au premier rebord latéral 21 avec des portions arrondies à ses extrémités pour faciliter le glissement de l'ergot.

La deuxième gorge de guidage 26 est délimitée par une première paroi 38 parallèle à la première face latérale 16a de la tige de clé 8 et une deuxième paroi 39, parallèle au deuxième rebord latéral 22. La première paroi 38 est perpendiculaire à la deuxième paroi 39.

La deuxième marche 35 est formée par une paroi reliant le deuxième rebord latéral 22 à la deuxième paroi 39 de la deuxième gorge de guidage 26. La deuxième marche 35 est de préférence sensiblement inclinée par rapport à la deuxième paroi 39 et au deuxième rebord latéral 22 avec des portions arrondies à ses extrémités pour faciliter le glissement de l'ergot.

La deuxième gorge de guidage 26 est également délimitée par une paroi aval 46, opposée à la deuxième marche 35.

La première gorge de guidage 25 et la deuxième gorge de guidage 26 se chevauchent partiellement de manière à présenter une portion 40, 41 respective en regard l'une de l'autre.

Les figures 4 à 7 illustrent différentes étapes lors de l'introduction de la clé dans le verrou 1.

Lors de l'introduction de la clé dans le verrou 1, comme illustrée sur la figure 4, le premier ergot 11 de la came de commande 9 est guidé par la première gorge de guidage 25 et parallèlement, le deuxième ergot 11a suit le deuxième rebord latéral 22.

La came de commande 9 reste ainsi en position escamotée dans laquelle le pêne 3 est en position de verrouillage de la colonne de direction.

Comme représenté sur la figure 5, le premier ergot 11 de la came de commande 9 coulisse, au fur et à mesure de l'insertion de la clé, dans la portion 40 de la première gorge de guidage 25 qui est en regard de la deuxième portion 41 de la deuxième gorge de guidage 26, jusqu'à la première marche 34.

Parallèlement, le deuxième ergot 11a longe la deuxième gorge de guidage 26 sans être en contact avec elle. La came de commande 9 reste toujours en position escamotée.

Comme représenté sur les figures 6 et 7, lorsque la clé continue à être insérée dans le verrou 1, le premier ergot 11 de la came de commande 9 franchit la première marche 34 pour translater selon la direction transversale B jusqu'au premier rebord latéral 21 et le longer.

Le premier rebord latéral 21 formant le chemin de came de commande 10 étant décalé en hauteur par rapport à la première gorge de guidage 25 dans le plan de la première face latérale 16a, la came de commande 9 se déplace de la position escamotée vers la position saillante, actionnant le moyen de maintien 4 vers sa position de maintien du pêne 3 en position de libération de la colonne de direction.

Le deuxième ergot 11a s'engage alors dans la deuxième gorge de guidage 26 pour coulisser le long de celle-ci jusqu'à l'insertion complète de la clé dans le verrou 1.

La figure 7 représente une vue transversale de la came de commande 9 recevant la clé.

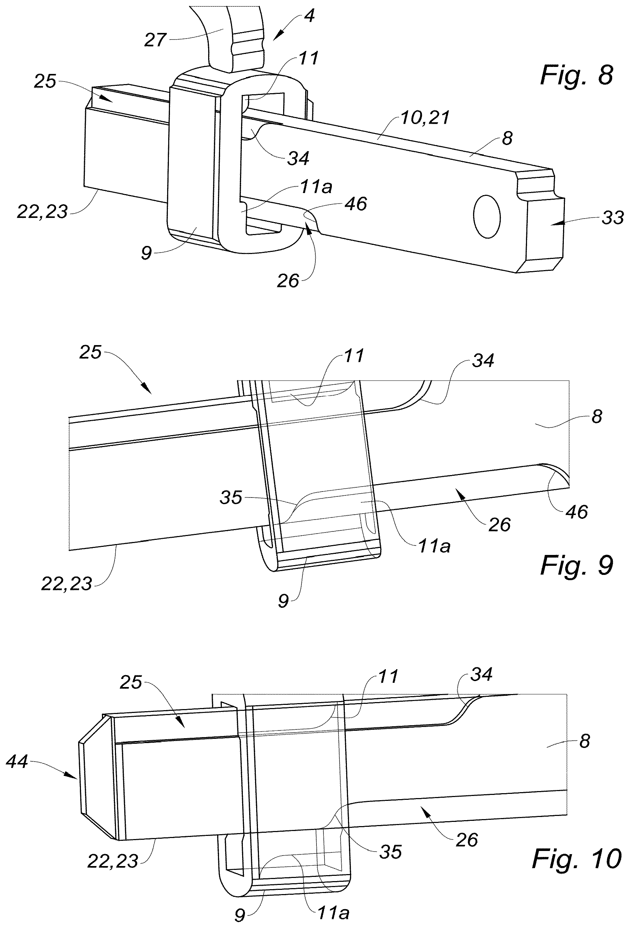

Les figures 8 à 10 représentent différentes étapes lors de l'extraction de la clé hors du verrou 1 selon ce mode de réalisation.

Lors de l'extraction de la clé hors du verrou 1, comme représentée sur les figures 8 et 9, le deuxième ergot 11a suit la deuxième gorge de guidage 26 jusqu'à la deuxième marche 35.

Le premier ergot 11 se retrouve face à la première gorge de guidage 25 sans être obligatoirement en contact avec elle, au niveau des portions 40, 41.

Le franchissement de la deuxième marche 35 par le deuxième ergot 11a, comme illustré sur la figure 10, entraine le coulissement de ce dernier selon la direction transversale B puis son coulissement le long du deuxième rebord latéral 22.

La deuxième gorge de guidage 26 étant décalée en hauteur par rapport au deuxième rebord latéral 22 formant le chemin de came de commande d'escamotage 23, dans le plan de la première face latérale 16a, la came de commande 9 se déplace de la position saillante vers la position escamotée, actionnant le moyen de maintien 4 dans sa position de libération du pêne 3 qui sera apte à entrer dans sa position de verrouillage de la colonne de direction.

Le premier ergot 11 s'engage dans la première gorge de guidage 25 et coulisse alors le long de celle-ci jusqu'à l'extrémité avant 44 de la clé et l'extraction complète de la clé hors du verrou 1.

En variante, la première gorge de guidage 25 peut être positionnée sur la première face latérale 16a et la deuxième gorge de guidage 26 peut être positionnée sur la deuxième face latérale 16b de la tige de clé 8.

En variante, la deuxième face latérale 16b de la tige de clé 8 peut également comprendre une autre première gorge de guidage 25 et une autre deuxième gorge de guidage 26 disposées en symétrie avec celles positionnées sur la première face latérale 16a.

La came de commande 9 peut comprendre une rainure latérale de guidage 45 pour améliorer son coulissement dans le logement du verrou 1.

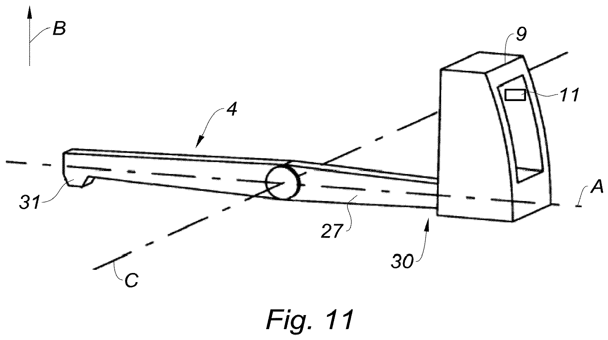

La figure 11 représente un dispositif antivol de colonne de direction de véhicule automobile selon un autre mode de réalisation de l'invention.

La came de commande 9 est montée en rotation sur le rotor 5 autour d'un axe de rotation C perpendiculaire à l'axe de rotation A du rotor 5.

Le moyen de maintien 4 du dispositif antivol 2 comprend un levier 27 monté en rotation autour de l'axe de rotation C.

La came de commande 9 est solidaire ou intégrée au levier 27 du moyen de maintien 4 du dispositif antivol 2.

La première extrémité 30 du levier 27 est fixée à la came de commande 9.

La deuxième extrémité 31 du levier 27 est apte à maintenir le pêne 3 dans sa position de libération de la colonne de direction.

La came de commande 9 comprend un ergot 11 agencé pour être reçu dans le chemin de came de commande 10 de la tige de clé 8 de manière à suivre son profil lors de l'introduction ou du retrait de la tige de clé 8 dans le rotor 5 de sorte qu'un déplacement axial de la tige de clé 8 entraine une rotation de la came de commande 9 dans le plan de la figure 11.

Lors de l'insertion de la tige de clé 8, l'ergot 11 de la came de commande 9 s'insère dans le chemin de came de commande 10 de la tige de clé 8, entraînant la rotation du levier 27.

Lors de l'extraction de la tige de clé 8, l'ergot 11 de la came de commande 9 suit aussi le chemin de came de commande 10 de la tige de clé 8, le levier 27 est en outre entraîné en rotation dans un sens opposé à celui de l'insertion, sous l'effet additionnel d'un ressort (non représenté) qui va maintenir la position escamotée.

Si selon l'invention il existe un ressort, ce dernier n'est présent que pour maintenir le contact du levier avec la came de commande ou la ramener en position escamotée.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Verrou (1) pour dispositif antivol (2) de colonne de direction de véhicule automobile comportant un pêne (3) et un moyen de maintien (4) du pêne (3) en translation entre une position de verrouillage de la colonne de direction et une position de libération de ladite colonne, le verrou (1) comprenant un rotor (5) monté en rotation autour d'un axe (A) dans un stator (6) et une pluralité de paillettes (7) montées à coulissement dans le rotor (5) suivant une direction transversale (B) entre au moins une position saillante dans laquelle elles immobilisent en rotation le rotor (5) par rapport au stator (6), et une position escamotée à l'intérieur du rotor (5) après l'introduction dans le rotor (5) d'une tige de clé (8), permettant le déverrouillage du verrou (1) par une rotation de la clé, le verrou (1) comprenant une came de commande (9) destinée à suivre au moins le profil d'un chemin de came de commande (10,25) prévu sur la tige de clé (8) lors du déplacement de ladite clé dans le rotor (5), la came de commande (9) étant apte à se déplacer dans le rotor (5) entre :
- une position saillante obtenue lorsque la came de commande (9) suit le profil du chemin de came de commande (10,25) lors de l'introduction de la tige de clé (8), la came de commande (9) étant apte à actionner le moyen de maintien (4) dans le but de maintenir le pêne (3) en position de libération de la colonne de direction, et
- une position escamotée obtenue lorsque la came de commande (9) suit le profil du chemin de came de commande (10,25) lors du retrait de la tige de clé (8), correspondant à la position de libération du pêne (3) pour bloquer la colonne de direction, **caractérisé en ce que** :
la came de commande (9) comprend au moins un ergot (11) agencé pour être reçu dans le chemin de came de commande (10,25) de la tige de clé (8) de manière à suivre le profil de la tige de clé (8) dans le rotor (5) de sorte qu'un déplacement axial de la tige de clé (8) entraine un déplacement de la came de commande (9).

2. Verrou (1) selon la revendication 1, **caractérisé en ce que** la came de commande (9) est montée en translation dans le rotor (5) permettant le coulissement de la came de commande (9) selon la direction transversale (B).

3. Verrou (1) selon la revendication 1, **caractérisé en ce que** la came de commande (9) est solidaire d'un levier (27) du moyen de maintien (4), la came de commande (9) et le levier (27) étant montés en rotation autour d'un axe de rotation (C) sur le rotor (5), pour déplacer le pêne (3) entre une position de libération et une position de verrouillage.

4. Verrou (1) selon l'une quelconque des revendications 1 à 3, **caractérisé en ce que** la came de commande (9) comprend un orifice central (12) destiné à être traversé par la tige de clé (8), l'ergot (11) étant positionné sur une paroi interne (15) délimitant l'orifice central (12).

5. Verrou (1) selon l'une quelconque des revendications 1 à 4, **caractérisé en ce que** la came de commande (9) est positionnée entre les paillettes (7) et une face d'entrée (13) du verrou (1) par laquelle la clé est destinée à être insérée, la came de commande (9) étant positionnée parallèlement aux paillettes (7).

6. Verrou (1) selon l'une quelconque des revendications 1 à 5, **caractérisé en ce que** la came de commande (9) comprend deux ergots (11, 11a) positionnés sur sa paroi interne (15) dont un premier ergot (11) destiné à déplacer la came de commande (9) en position saillante lorsque le premier ergot (11) suit le profil du chemin de came de commande (10,25) de la tige de clé (8) et un deuxième ergot (11a) destiné à déplacer la came de commande (9) en position escamotée lorsque le deuxième ergot (11a) suit le profil d'un chemin de came de commande d'escamotage (23) de la tige de clé (8), les ergots (11, 11a) étant opposés et en regard l'un de l'autre pour coopérer avec les chemins de came de commande (25, 2622, 23) qui sont opposés et décalés.

7. Verrou (1) selon l'une quelconque des revendications 1 à 6, **caractérisé en ce que** le moyen de maintien (4) comprend un ressort (29) pour maintenir une première extrémité (30) du levier (27) en appui contre la came de commande (9) et la ramener vers la position escamotée correspondant à la position de libération du pêne (3) pour bloquer la colonne de direction.

8. Clé comprenant une tige de clé (8) agencée pour coopérer avec des paillettes (7) d'un verrou (1) d'un dispositif antivol (2) comportant un pêne (3) et un moyen de maintien (4) du pêne (3) en translation entre une position de verrouillage de la colonne de direction et une position de libération de la colonne, le verrou (1) comprenant un rotor (5) monté en rotation autour d'un axe (A) dans un stator (6) et une pluralité de paillettes (7) montées à coulissement dans le rotor (5) suivant une direction transversale (B) entre au moins une position saillante dans laquelle elles immobilisent en rotation le rotor (5) par rapport au stator (6), et une position escamotée à l'intérieur du rotor (5) après l'introduction dans le rotor (5) de la tige de clé (8), permettant le déverrouillage du verrou (1) par une rotation de la clé, **caractérisée en ce que** la tige de clé (8) comprend :au moins un chemin de came de commande (10,25) destiné à recevoir un ergot (11) prévu sur une came de commande (9) logée dans le rotor (5) du verrou (1) de sorte à déplacer la came de commande (9) lorsque la tige de clé (8) est déplacée dans le rotor (5) entre :
∘ une position saillante obtenue lorsque la came de commande (9) suit le profil du chemin de came de commande (10,25) lors de l'introduction de la tige de clé (8), la came de commande (9) étant apte à actionner le moyen de maintien (4) dans le but de maintenir le pêne (3) en position de libération de la colonne de direction, et
∘ une position escamotée obtenue lorsque la came de commande (9) suit le profil du chemin de came de commande (10,25) lors du retrait de la tige de clé (8), correspondant à la position de libération du pêne (3) pour bloquer la colonne de direction.

9. Clé selon la revendication 8, **caractérisée en ce que** la tige de clé (8) présente une section quadrilatérale, allongée dans le sens du coulissement des paillettes (7), et deux faces latérales (16a, 16b) opposées dont l'une au moins comprend un chemin de came de codage (17) comportant une succession de crêtes (18) et de creux (19) pour former un codage, le chemin de came de codage (17) étant agencé pour recevoir au moins un ergot (20) des paillettes (7) du verrou (1) de manière à ce que lesdits ergots (20) suivent cette succession de crêtes (18) et de creux (19) lors de l'introduction de la tige de clé (8) dans le rotor (5) de sorte qu'un déplacement axial de la clé entraine un déplacement de chacune des paillettes (7) selon la direction transversale (B) jusqu'à la position escamotée permettant le déverrouillage du verrou (1) par une rotation de la clé, le chemin de came de codage (17) étant prolongé par le chemin de came de commande (10,25) de sorte que l'ergot (11) prévu sur la came de commande (9) puisse suivre le chemin de came de commande (10,25) après avoir suivi le chemin de came de codage (17) pour amener la came de commande (9) en position saillante lors de l'introduction de la tige de clé (8) dans le rotor (5), le chemin de came de commande (10,25) étant taillé en creux et décalé par rapport au chemin de came de codage (17) vers le moyen de maintien (4) du pêne (3).

10. Clé selon la revendication 9, **caractérisée en ce que** le chemin de came de commande (10,25) est rectiligne, et positionné dans une zone aval (24b) de la tige de clé (8) par rapport au sens d'introduction de la clé dans le verrou (1).

11. Clé selon la revendication 10, **caractérisée en ce que** la tige de clé (8) comprend un premier rebord latéral (21) formant le chemin de came de commande (10,25) destiné à guider un premier ergot (11) positionné sur une paroi interne (15) d'un orifice central (12) de la came de commande (9), ledit premier rebord latéral (21) étant positionné dans une zone aval (24b) de la tige de clé (8) par rapport au sens d'introduction de la clé dans le verrou (1).

12. Clé selon la revendication 11, **caractérisée en ce que** la tige de clé (8) comprend un deuxième rebord latéral (22) opposé au premier rebord latéral (21) et formant un chemin de came de commande d'escamotage (23) de la came de commande (9) destiné à guider un deuxième ergot (11a) positionné sur ladite paroi interne (15) de l'orifice central (12) de la came de commande (9), ledit deuxième rebord latéral (22) étant positionné dans une zone amont (24a) de la tige de clé (8) par rapport au sens d'introduction de la clé dans le verrou (1).

13. Clé selon la revendication 11 ou 12, **caractérisée en ce que** la tige de clé (8) comprend une première gorge de guidage (25) sur une première face latérale (16a) positionnée dans la zone amont (24a) et prolongeant le premier rebord latéral (21) de façon décalée dans le plan de la première face latérale (16a), et une deuxième gorge de guidage (26) positionnée sur la première face latérale (16a) prolongeant le deuxième rebord latéral (22) de façon décalée dans le plan de la première face latérale (16a), lesdites gorges de guidage (25, 26) étant opposées et partiellement décalées l'une par rapport à l'autre suivant la direction de l'axe (A), lors de l'introduction de la clé dans le verrou (1), le premier ergot (11) étant guidé par la première gorge de guidage (25) puis par le premier rebord latéral (21), parallèlement, le deuxième ergot (11a) longeant le deuxième rebord latéral (22) puis coulissant le long de la deuxième gorge de guidage (26) et vice versa lors du retrait de ladite clé.

14. Ensemble comprenant un verrou selon l'une quelconque des revendications 1 à 7 et une clé selon l'une quelconque des revendications 8 à 13.
